# EUROPÄISCHE PATENTANMELDUNG

(11) **EP 3 536 470 A1**
(43) Veröffentlichungstag der Anmeldung: **11.09.2019**
(21) Anmeldenummer: 18160336.6
(22) Anmeldetag: 06.03.2018
(51) Int. Cl.: B29B 9/16, C08G 63/80, B29B 13/02, C08G 63/88, B01J 19/00, F26B 17/00, B29B 9/06

(54) **VERFAHREN UND VORRICHTUNG ZUM THERMISCHEN BEHANDELN VON KUNSTSTOFFGRANULAT**

(71) Anmelder: Nordson Corporation, Westlake, OH 44145-1119 (US)
(72) Erfinder: Simon, Ralf, 48301 Nottuln (DE); Gielen, Udo, 59348 Lüdinghausen (DE)
(74) Vertreter: Eisenführ Speiser

(57) **Zusammenfassung**

Verfahren zum thermischen Behandeln von Granulat aus Kunststoff, insbesondere aus Polyester, mittels Kristallisation, mit den Schritten: Zuführen eines Granulats zu einem Kristallisationsreaktor und zumindest teilweises Kristallisieren des Granulats in dem Kristallisationsreaktor, welcher durch das Kühlen des teilkristallisierenden bzw. teilkristallisierten Granulats gekennzeichnet ist; sowie darauf bezogene Vorrichtung zum thermischen Behandeln von Granulat aus Kunststoff, insbesondere aus Polyester, mittels Kristallisation, mit einem Granulate aufnehmenden Kristallisationsreaktor (2) zum wenigstens teilweisen Kristallisieren der Granulate, wobei eine Kühleinrichtung (20) zum Kühlen der teilkristallisierten Granulate vorgesehen ist.

## Beschreibung

Die Erfindung bezieht sich auf ein Verfahren zum thermischen Behandeln von Granulat aus Kunststoff, insbesondere aus Polyester, mittels Kristallisation. Ferner bezieht sich die Erfindung auch auf eine Vorrichtung zum thermischen Behandeln von Granulat aus Kunststoff, insbesondere aus Polyester, mittels Kristallisation, mit zumindest einem teilkristallisierte Granulate aufnehmenden Kristallisationsreaktor.

Granulate aus Kunststoff, im Weiteren auch als Kunststoff-Granulat bezeichnet, werden als Ausgangsprodukt für die Herstellung verschiedenster Kunststoffprodukte verwendet, wie Folien oder Aufnahmebehälter, wie beispielsweise Kunststoff-Flaschen aus PET. Die Granulate, welche üblicherweise mittels einer Granuliereinrichtung erzeugt sind, werden zum Beispiel einem Trägerstrom, insbesondere einem Fluidstrom aus Wasser, hinzugegeben und zu einer Trennvorrichtung transportiert. Innerhalb der Trennvorrichtung wird ein Granulat aus beispielsweise PET vom Fluidstrom getrennt. Anschließend wird das Granulat in einen nachgeschalteten Kristallisationsreaktor eingeleitet, wobei das Granulat eine Temperatur aufweist, die innerhalb eines Temperaturbereiches liegt, bei der die Kristallisation abläuft. Ein Kunststoff-Granulat aus PET kann beispielsweise eine Temperatur von mehr als 130 °C aufweisen. Auch andere Kunststoffe, wie zum Beispiel Polyamid (PA), Polyoxymethylen (POM) oder Polybutylenterephthalat (PBT) werden zu Granulaten verarbeitet, welche im Vergleich zu PET unterschiedliche Verarbeitungs- und Kristallisationstemperaturen haben.

Mit dem Einleiten des Granulats in einen Kristallisationsreaktor soll eine Umwandlung der Gefügestruktur des Kunststoff-Granulats erfolgen, welche dann eine zumindest teilkristallisierte Struktur haben. Dadurch kann Einfluss auf die mechanischen, thermischen und auch chemischen Eigenschaften des Granulats genommen werden, wobei mit ablaufender Kristallisation sich die Temperatur im Kristallisationsreaktor weiter erhöht. In Abhängigkeit von den im Granulat einzustellenden Eigenschaften durchläuft das Granulat den Kristallisationsreaktor zwischen bestimmten Temperaturgrenzen in einer beeinflussbaren Zeitdauer, wobei dann mittels einer dem Kristallisationsreaktor nachgeschalteten Fördereinrichtung das Granulat, welches den gewünschten Kristallisationsgrad erreicht hat, einem Festphasenpolykondensator oder einer anderen Weiterverarbeitungseinrichtung zugeführt werden kann. Ein solches Verfahren ist beispielsweise in DE 10 2005 026 962 A1 gezeigt.

Problematisch kann es werden, wenn beispielsweise aufgrund eines Defekts an zum Beispiel dem Kristallisationsreaktor oder dem Festphasenpolykondensator eine Störung im Verfahrensablauf eintritt. Das kann zur Folge haben, dass das Verfahren zum Herstellen des Granulats unterbrochen werden muss. Die erzeugten Granulate können nicht weiter verarbeitet und auch nicht so ohne Weiteres umgelagert werden. Die Lagerung des Granulats kann dann nur in temperaturfesten Behältern erfolgen, die zudem eine geringe chemische Reaktionsfähigkeit besitzen. Die Investitionskosten für derartige Behälter sind üblicherweise sehr hoch. Ferner würde das Granulat bis zu seinem maximal möglichen Kristallisationsgrad auskristallisieren. Eine gezielte Beeinflussung der Eigenschaften des Granulats wäre nicht mehr möglich. Ein weiteres Problem ist das "Verbacken" der Granulate zu einem großen Klumpen, wenn diese mit zu hoher Temperatur und hohem Eigengewicht über eine bestimmte Zeitspanne nicht bewegt werden.

Der Erfindung lag somit die Aufgabe zugrunde, ein Verfahren und eine Vorrichtung zum thermischen Behandeln von Granulat aus Kunststoff anzugeben, mit denen der Verfahrensablauf beim Herstellens von Kunststoff-Granulaten auch bei auftretenden Störungen auf einfache und sichere Weise weiterhin möglich ist.

Die Erfindung löst die ihr zugrundeliegende Aufgabe bei einem Verfahren zum thermischen Behandeln von Granulat aus Kunststoff mit den Merkmalen nach Anspruch 1. Insbesondere ist ein Verfahren zum thermischen Behandeln mit den Schritten vorgesehen: Zuführen eines Granulats zu einem Kristallisationsreaktor, und zumindest teilweises Kristallisieren des Granulats in dem Kristallisationsreaktor, wobei sich das Verfahren durch Kühlen des teilkristallisierenden bzw. teilkristallisierten Granulats auszeichnet. Die Erfindung macht sich hierbei die Erkenntnis zunutze, dass mittels des Kühlens des zumindest teilkristallisierten Granulats, was vorzugsweise schlagartig erfolgt, das Granulat auf eine Temperatur, bevorzugt unterhalb der Kristallisationstemperatur, abgekühlt werden kann, bei der zumindest Einfluss auf die Geschwindigkeit des Kristallisationsprozesses genommen wird. Mit dem Abkühlen des Granulats unterhalb der Kristallisationstemperatur ist erreicht, dass der Kristallisationsprozess des Granulats gestoppt ist und der Kristallisationsgrad des Kunststoff-Granulats nicht weiter fortschreitet. Bevorzugt ist der Kristallisationsgrad dadurch gezielt einstellbar. Zudem kann ein entsprechend abgekühltes Granulat in einen Behälter für eine mögliche Zwischenlagerung eingeleitet werden. Da die Temperatur dann unterhalb der Kristallisationstemperatur liegt, kann im Behälter keine zusätzliche Wärme mehr entstehen, die sich nachteilig auf die Lagerung des teilkristallisierten Granulats auswirkt.

In einer bevorzugten Weiterbildung der Erfindung ist vorgesehen, dass das teilkristallisierte Granulat unmittelbar vor dem Zuführen in den Kristallisationsreaktor, innerhalb des Kristallisationsreaktors und/oder nach dem Durchlaufen des Kristallisationsreaktors gekühlt wird. Um insbesondere bei Auftreten eines Störfalles am Kristallisationsreaktor entsprechend frühzeitig Eingriff in den Prozess nehmen zu können, wird in einer Ausführungsform der Erfindung das teilkristallisierte Granulat unmittelbar vor Eintritt in den Kristallisationsreaktor bevorzugt umgeleitet und abgekühlt. In einer anderen Ausführungsform der Erfindung ist vorgesehen, das Granulat innerhalb des Kristallisationsreaktors zu kühlen. Eine andere Ausgestaltung der Erfindung sieht vor, das Granulat erst nach dem Durchlaufen des Kristallisationsreaktors abzukühlen, wobei das Granulat dann bevorzugt bereits einen gewünschten Kristallisationsgrad aufweist.

Gemäß einer Ausführungsform der Erfindung ist es möglich, dass die oben genannten verschiedenen Arten des Kühlens untereinander kombinierbar sind, sodass im Bedarfsfall mindestens zwei Abkühlvorgänge gleichzeitig innerhalb des erfindungsgemäßen Verfahrens zum thermischen Behandeln umgesetzt werden können. In Abhängigkeit vom verwendeten Kunststoff oder weiteren den Kristallisationsprozess bestimmender Faktoren kann das dem Kristallisationsreaktor zugeführte teilkristallisierte Granulat, das Granulat innerhalb des Kristallisationsreaktor bzw. das teilkristalline Granulat unmittelbar am Ausgang des Kristallisationsreaktor eine Temperatur im Bereich von etwa 30°C bis ungefähr 220°C aufweisen. Insbesondere nach dem Durchlaufen des Kristallisationsreaktors und bevor das teilkristallisierte Granulat gekühlt wird, weist das Granulat eine Temperatur im Bereich von etwa 100°C bis ungefähr 220°C auf.

Die Bestimmung der Temperatur des Granulats erfolgt vorzugsweise mittels der Messung der Oberflächentemperatur des Granulats unter Verwendung eines Infrarotthermometers. Zur Messung wird bevorzugt ein Infrarotthermometer der Firma Raytek mit der Bezeichnung "Raynger® Series 3i Plus" eingesetzt. Dabei wir zum Beispiel der Emissionsgrad des verwendeten Infrarotthermometers insbesondere auf einen Wert von 0,95 für den zu messenden Kunststoff eingestellt. Weitere für die Temperaturmessung zu berücksichtigende Einstellungen sind der Bedienungsanleitung des entsprechend verwendeten Infrarotthermometers zu entnehmen. Die Messung erfolgt an den jeweiligen für die angegebenen Verfahrensschritte relevanten Positionen im Prozess.

Gemäß einer bevorzugten Weiterbildung des erfindungsgemäßen Verfahrens ist das Kühlen des Granulats, vorzugsweise zum Halten des Kristallisationsgrades des Granulats unterhalb eines bestimmten Grenzwertes, auf eine Granulattemperatur unterhalb der Kristallisationstemperatur des Kunststoffes, vorzugsweise unterhalb 90°C, besonders bevorzugt auf eine Temperatur unterhalb 60°C vorgesehen. Zum einen ist durch das Kühlen des Granulats aus beispielsweise PET unterhalb einer Temperatur von 90°C gewährleistet, dass die Kristallisation im Granulat vollständig gestoppt ist. Mit dem Kühlen des Granulats auf eine Temperatur unterhalb 60°C ist ein Temperaturwert erreicht, mit dem das Lagern, insbesondere das Zwischenlagern, des teilkristallisierten Granulats in nicht temperaturfesten Behältern, beispielsweise aus Aluminium, möglich wird. Dadurch lassen sich die Investitionskosten für eine Vorrichtung zur Umsetzung des Verfahrens deutlich reduzieren. Bei anderen Kunststoffen bzw. anderen Materialien zum Ausbilden eines Behälters können entsprechend abweichende Temperaturbereiche eingestellt werden.

Gemäß einer bevorzugten Weiterbildung des erfindungsgemäßen Verfahrens umfasst dieses den Schritt Kühlen des teilkristallisierten Granulats mittels eines Fluidstromes, der vorzugsweise in einem Kreislauf geführt wird, wobei vorzugsweise a) zum Kühlen des Granulats, bevor das Granulat in den Kristallisationsreaktor eingebracht wird oder nachdem das Granulat den Kristallisationsreaktor durchlaufen hat, das Granulat in den Fluidstrom eingebracht wird, oder b) zum Kühlen des Granulats innerhalb des Kristallisationsreaktors der Fluidstrom in Bereiche des Kristallisationsreaktors eingeleitet wird, vorzugsweise durch Einleiten des Fluidstromes in entgegengesetzte Richtung zur Bewegungsrichtung des Granulats durch den Kristallisationsreaktor. Das eingeleitete und im Kristallistaionsbehälter befindliche teilkristallisierte Granulat kann eine Temperatur im Bereich von etwa 30°C bis ungefähr 220°C haben. Gemäß einer Ausführungsform der Erfindung wird das teilkristallisierte Granulat, nachdem es kurz zuvor von einem Fluidstrom getrennt wurde, somit unmittelbar erneut einem Fluidstrom zugeführt. Mittels des Fluidstroms wird das Granulat auf eine Temperatur zumindest unterhalb der Kristallisationstemperatur gekühlt. In einer Ausführungsform der Erfindung erfolgt das Eingeben des teilkristallisierten Granulats in den Fluidstrom unmittelbar nach dem das Granulat den Kristallisationsreaktor durchlaufen hat. Ein solches teilkristallisiertes Granulat weist unmittelbar vor bzw. mit dem Einleiten in den Fluidstrom eine Temperatur im Bereich von etwa 100°C bis ungefähr 220°C auf. Mit dem Einbringen des Granulats in einen Fluidstrom ist eine effektive Art des Kühlen des Granulats unterhalb der Kristallisationstemperatur, vorzugsweise bis auf eine Temperatur unterhalb 90 °C, bevorzugt auf eine Temperatur unterhalb 60°C erreicht.

Gemäß einer zweiten Variante wird, anstatt das Granulat in einen Fluidstrom einzugeben, ein Fluidstrom durch Bereiche des Kristallisationsreaktors geleitet. Vorzugsweise wird der Fluidstrom durch den Aufnahmeraum im Kristallisationsreaktor hindurchgeleitet. Das Granulat gelangt somit unmittelbar mit dem hindurchgeleiteten Fluidstrom in Kontakt. In einer weiteren Ausführungsform der Erfindung können der das Granulat kühlende Fluidstrom und der den Kristallisationsreaktor durchlaufende Granulatstrom räumlich voneinander getrennt sein. Vorzugsweise wird der Granulatstrom bei einer räumlichen Trennung vom Fluidstrom dann auf mehrere kleinere Granulatströme aufgeteilt, um die Oberfläche des Granulatstromes zu vergrößern und die Wärmeübertragung zwischen den räumlich voneinander getrennten Massenströmen zu verbessern.

Eine weitere Ausführungsform der Erfindung umfasst ferner den Schritt Abscheiden des auf die Granulattemperatur unterhalb von etwa 90°C, bevorzugt auf eine Temperatur unterhalb 60°C, gekühlten Granulats aus dem Fluidstrom oder aus dem vom Fluidstrom durchströmten Kristallisationsreaktor. Nachdem das Granulat auf eine Temperatur von unter 90°C bevorzugt unterhalb 60°C abgekühlt worden ist, wird das Granulat wieder von dem Fluidstrom getrennt bzw. aus dem Kristallisationsreaktor ausgegeben. Um auf die bevorzugte Temperatur von 60°C zu gelangen, wird insbesondere die Temperatur des Granulats vor dem Einbringen des Granulats in den Fluidstrom bzw. dem Eingeben des Granulats in den Kristallisationsreaktor erfasst. Durch Steuerung des Massenstromes des Fluidstromes sowie des Granulatstromes, deren Größe bevorzugt aufeinander abgestimmt wird, kann der Abkühlvorgang und damit die sich einstellende Granulattemperatur gezielt beeinflusst werden. Vorzugsweise wird in einer Ausführungsform neben der Granulattemperatur auch die Temperatur des Fluidstromes vor dem Zusammenführen mit dem Granulat sowie die Massenströme des Granulats und des Fluids überwacht. In einer Ausführungsform der Erfindung weist der zum Kühlen des Granulats verwendete Fluidstrom vor dem Zusammenführen mit dem Granulat eine Temperatur von vorzugsweise unterhalb 70°C auf.

Vorzugsweise umfasst das erfindungsgemäße Verfahren ferner den Schritt des Einbringens des abgekühlten Granulats in einen Behälter zum Zwischenlagern des gekühlten teilkristallinen Granulats. Ein insbesondere auf unter 90 °C, bevorzugt auf eine Temperatur unterhalb bzw. um 60°C, gekühltes Granulat kann in einen nicht temperaturfesten, zum Beispiel aus Aluminium bestehenden Behälter eingeleitet werden. Somit sind auch relativ große Mengen an dem gekühlten teilkristallisierten Granulat ohne hohe Investitionskosten zwischenlagerbar. Ein solcher Zwischenspeicher schafft die Möglichkeit des Pufferns des in dem erfindungsgemäßen Verfahren hergestellten Granulats ohne die Notwendigkeit das Herstellen des Granulats unterbrechen zu müssen.

In einer weiteren bevorzugten Ausführungsform umfasst das Verfahren den Schritt: Aufgeben von in einem Behälter gelagertem, kühlem Granulat als Mengenstrom in einen unmittelbar in den Kristallisationsreaktor eingeleiteten Granulatstrom, wobei die Größe des Mengenstromes des kühlen Granulats in einem vorbestimmten Verhältnis zur Größe des Granulatstromes aufgegeben wird. Insbesondere nach dem Beseitigen der Störung, so dass ein regulärer Verfahrensablauf vorliegt, wird in einer bevorzugten Ausführungsform das gekühlte im Behälter zwischengelagerte Granulat in den Produktionsprozess zurückgeführt. Dazu wird das Granulat in Form eines Mengenstromes einem unmittelbar zuvor hergestellten Granulatstrom aufgegeben, der unmittelbar dem Kristallisationsreaktor zugeführt wird. Die Größe des Mengenstromes des gekühlten Granulats ist in einem bestimmten Verhältnis zur Größe des noch "heißen" Granulatstromes variierbar. In Abhängigkeit von der Temperatur des kühlen Granulats wird beispielsweise ein Mengenstrom des kühlen Granulats in einem Bereich von etwa 5 bis 20 % bezogen auf den Mengenstrom des "heißen" Granulats in den Granulatstrom zugegeben. Mit dem Eingeben des kühlen Granulatstromes in den heißen Granulatstrom kann das hinzugegebene Granulat ohne zusätzliche Zufuhr von Wärmeenergie wieder auf eine Temperatur oberhalb der Kristallisationstemperatur erwärmt werden. Die unterbrochene Kristallisation des kühlen teilkristallisierten Granulats wird damit wieder gestartet und nachträglich auf einen bestimmten Kristallisationsgrad einstellbar. Im Ergebnis ist das Einstellen des Kristallisationsgrades durch das Hinzugeben von bereits teilkristallisiertem Granulat verbessert.

Gemäß einer bevorzugten Ausgestaltung umfasst das erfindungsgemäße Verfahren einen, mehrere oder sämtliche der nachfolgend aufgeführten Schritte: Herstellen eines Granulats mittels einer Granuliereinrichtung; Zuführen des erzeugten Granulats mittels eines Förderstromes zu einer Abscheidevorrichtung; Abscheiden des im Förderstrom enthaltenen festen Granulats aus dem Förderstrom, wobei das Granulat nach dem Abscheidevorgang eine Granulattemperatur in einem Temperaturbereich von etwa 30°C bis ungefähr 220°C hat, und/oder Einleiten des Granulats mit einer Temperatur in einem Temperaturbereich von etwa 30°C bis ungefähr 220°C in Form eines Granulatstromes in den Kristallisationsreaktor oder zu einem Nachfolgeprozess. Das Herstellen des Granulats erfolgt bevorzugt mittels einer Granuliereinrichtung, welche nach Art eines Heißabschlag- oder Kaltabschlagverfahrens arbeitet. Vorzugsweise wird nach dem Erzeugen des Granulats mittels der Granuliereinrichtung das erzeugte Granulat in Form eines Förderstromes zu einer Abscheidevorrichtung geleitet. Unter Zuhilfenahme eines Fluidstromes kann das Granulat relativ einfach von der Granuliereinrichtung über eine bestimmte Wegstrecke transportiert werden, ohne dass die Granulatteilchen aneinanderkleben. Innerhalb der Abscheidevorrichtung wird der Förderstrom in einen Granulatstrom und einen Fluidstrom, mit dem das Granulat transportiert wurde, unterteilt. Nach dem Abscheiden weist das Granulat eine Temperatur in einem Temperaturbereich von etwa 30°C bis ungefähr 220°C, insbesondere eine Temperatur oberhalb der Kristallisationstemperatur des Kunststoffes, insbesondere von größer 100°C, vorzugsweise von größer 130°C auf. Oberhalb von beispielsweise 130°C bei PET läuft dann die gewünschte Kristallisation ab, sodass sich innerhalb des Granulats ein angestrebter Kristallisationsgrad einstellen kann. Insbesondere in Abhängigkeit vom verwendeten Kunststoff variiert die Kristallisationstemperatur des Kunststoff-Granulats. Während des Kristallisationsprozesses wird das Granulat vorzugsweise in Form eines Granulatstromes durch den Kristallisationsreaktor hindurchgeleitet bzw. einem anderen Nachfolgeprozess, wie beispielsweise einem Festphasenpolykondensator, zugeführt. Der Kristallisationsgrad wird über die Größe der Durchtrittsgeschwindigkeit des Granulatstromes durch den Kristallisationsreaktor eingestellt. Ferner ist dieser auch durch das Aufgeben von in einem Behälter gelagertem kühlem Granulat als Mengenstrom in den heißen Granulatstrom einstellbar.

Ein weiterer Aspekt der Erfindung betrifft eine Vorrichtung zum thermischen Behandeln von Granulat aus Kunststoff, insbesondere aus Polyester, mittels Kristallisation, mit einem Granulate aufnehmenden Kristallisationsreaktor zum wenigstens teilweisen Kristallisieren der Granulate.

Die erfindungsgemäße Vorrichtung löst die eingangs beschriebene Aufgabe mit den Merkmalen von Anspruch 9. Insbesondere ist eine Kühleinrichtung zum Kühlen der teilkristallisierten Granulate vorgesehen. Die Erfindung macht sich die Erkenntnis zunutze, dass mittels einer Kühleinrichtung die Temperatur der erzeugten, vorzugsweise schon einmal von einem Fluidstrom getrennten Granulate, welche dann üblicherweise eine Granulattemperatur oberhalb der Kristallisationstemperatur des Kunststoffes aufweisen, deren Temperatur sich einfach unterhalb auf eine Temperatur kühlen lassen, bei der zumindest Einfluss auf die Geschwindigkeit des Kristallisationsprozesses genommen wird. Bevorzugt ist die Kühleinrichtung so dimensioniert, dass das Granulat auf eine Temperatur abgekühlt werden kann, bei der der im Granulat ablaufende Kristallisationsprozess unterbrochen und damit das Fortschreiten des Kristallisationsgrades im Granulat gestoppt ist. Die Möglichkeit des Unterbrechens der Kristallisation im Granulat ermöglicht, dass insbesondere bei einem Störfall in einer ein Granulat herstellenden Vorrichtung der Granulierprozess nicht gestoppt werden muss oder als Endergebnis dann nur Granulate mit ihrem maximal möglichen Kristallisationsgrad vorliegen.

Gemäß einer bevorzugten Weiterbildung der Erfindung ist vorgesehen, dass die Kühleinrichtung dem Kristallisationsreaktor unmittelbar vorgeschaltet oder dem die separierten Granulate aufnehmenden Kristallisationsreaktor zugeordnet ist und/oder dem die separierten Granulate aufnehmenden Kristallisationsreaktor nachgeschaltet ist. Mit der Kühleinrichtung kann das in Richtung des Kristallisationsreaktors zugeführte Granulat unmittelbar vor dem Kristallisationsreaktor abgeführt werden, sodass das Granulat überhaupt nicht mehr in den Kristallisationsreaktor gelangt. Das dem Kristallisationsreaktor zugeführte teilkristallisierte Granulat, das innerhalb des Kristallisationsreaktor befindliche Granulat bzw. das unmittelbar am Ausgang des Kristallisationsreaktor ausgegebene teilkristalline Granulat weist eine Temperatur im Bereich von etwa 30°C bis ungefähr 220°C auf. In einer weiteren Ausführungsform ist die Kühleinrichtung dem Kristallisationsreaktor nachgeschaltet. Das Granulat wird erst nach Durchlaufen des Kristallisationsreaktors und dem Einstellen eines bestimmten Kristallisationsgrades an die Kühleinrichtung übergeben. In einer anderen Ausführungsform ist die Kühleinrichtung so mit dem Kristallisationsreaktor verknüpft, dass das Kühlen bereits innerhalb des Kristallisationsreaktors abläuft, während das Granulat die Förderstrecke vom Einlass des Kristallisationsreaktors bis zum Auslass des Kristallisationsreaktors zurücklegt. Gemäß einer bevorzugten Weiterbildung können mehrere Kühleinrichtungen gleichzeitig vorgesehen sein, welche an unterschiedlichen Positionen im Förderweg der erfindungsgemäßen Vorrichtung angeordnet sind. Vorzugswese ist eine einzige Kühleinrichtung Teil der erfindungsgemäßen Vorrichtung, welche mit mehreren Abschnitten der Förderstrecke der Vorrichtung, z.B. unmittelbar vor oder unmittelbar nach dem Kristallisationsreaktor, gekoppelt ist und im Bedarfsfall den Granulatstrom an dem entsprechenden Förderstreckenabschnitt umleitet.

Die Kühleinrichtung ist bevorzugt so dimensioniert und dazu eingerichtet, das Granulat auf eine Granulattemperatur unterhalb der Kristallisationstemperatur des Kunststoffes, vorzugsweise unterhalb 90°C, besonders bevorzugt auf eine Temperatur unterhalb 60°C abzukühlen, und vorzugsweise den Kristallisationsgrad des Granulats unterhalb eines bestimmten Grenzwertes zu halten, wobei der Kühleinrichtung oder dem Kristallisationsreaktor, dem die Kühleinrichtung zugeordnet ist, ein Zwischenspeicher zum Aufnehmen des teilkristallisierten Granulats nachgeschaltet ist. Mit Hilfe der erfindungsgemäßen Kühleinrichtung kann der Kristallisationsgrad des Granulats bevorzugt unterhalb eines bestimmten Grenzwertes von beispielsweise etwa 5 % gehalten werden, indem das noch heiße Granulat, was bevorzugt als Granulatstrom vorliegt, schlagartig auf eine Temperatur unterhalb der Kristallisationstemperatur des Kunststoffes, abgekühlt wird, bevorzugt auf einen Temperatur unterhalb der die Strukturfestigkeit eines Behälters nicht beeinträchtigt wird. Ein derartig gekühltes Granulat, welches einen niedrigen Kristallisationsgrad aufweist, kann beispielsweise in einen Behälter zum Zwischenlagern des teilkristallisierten Granulats eingeleitet werden. Aufgrund der bevorzugt niedrigen Temperatur unterhalb 60°C kann als Behälter zum Zwischenlagern ein nicht temperaturfester Behälter oder Silo aus Aluminium eingesetzt werden.

In einer Weiterbildung der erfindungsgemäßen Vorrichtung weist die Kühleinrichtung eine Mischeinrichtung zum Mischen des Granulats mit einem Fluidstrom, vorzugsweise einem Kühlwasserstrom, und mindestens eine Separiereinrichtung zum Trennen des gekühlten Granulats aus dem Fluidstrom auf, wobei die Separiereinrichtung vorzugsweise mit der Mischeinrichtung über eine Förderleitung zum Transportieren des Gemisches aus Fluidstrom und Granulat medienleitend verbunden ist. Über die Mischeinrichtung erfolgt das Einbringen bzw. Eintragen des Granulats in den das Granulat kühlenden Fluidstrom. Bevorzugt wird das Granulat in einem bestimmten Verhältnis zu dem bevorzugt umlaufend geführten Fluidstrom, der ein Kühlwasserstrom sein kann, eingegeben. Unmittelbar vor bzw. mit dem Einleiten weist das teilkristallisiertes Granulat eine Temperatur im Bereich von etwa 100°C bis ungefähr 220°C auf. Nachdem das Granulat eine vorbestimmte Zeitdauer innerhalb des Fluidstromes verweilt ist und dabei überschüssige Wärmeenergie abgegeben hat, wird das Granulat mittels der Separiereinrichtung, zum Beispiel einer Zentrifuge, von dem Fluidstrom wieder getrennt. Nach dem Trennen vom Fluidstrom weist das Granulat bevorzugt eine Temperatur unterhalb 60°C auf. Der zum Kühlen des Granulats benötigte Fluidstrom weist insbesondere nach dem Trennen vom Granulat eine Temperatur von vorzugsweise unterhalb 70°C auf. Für den Transport des Gemisches aus Granulat und Fluidstrom zwischen der Mischeinrichtung und der Separiereinrichtung ist eine Förderleitung vorgesehen. Bevorzugt weist der Fluidstrom an der Stelle, an der das heiße Granulat in den Fluidstrom eingegeben wird, eine konstant gehaltene Höchsttemperatur für einen bestimmten Wärmeübergang vom Granulat in den Fluidstrom auf.

Gemäß einer weiteren Ausführungsform der Erfindung ist die Kühleinrichtung, vorzugsweise die Separiereinrichtung, stromabwärts des geförderten kühlen Granulates mit einem zumindest als Zwischenspeicher ausgebildeten Behälter für das gekühlte Granulat verbunden. Das gekühlte Granulat, das bevorzugt eine Temperatur unterhalb 60°C aufweist, wird bevorzugt unmittelbar nach dem Trennen des Granulats vom Kühlmittelstrom in einen Behälter eingegeben, der zumindest als Zwischenlager für das gekühlte Granulat dient. Die Mischeinrichtung der Kühleinrichtung kann beispielsweise als schräge Rutsche, Pumpe oder Injektor ausgebildet sein. Die Separiereinrichtung der Kühleinrichtung kann, wie beispielsweise eine dem Kristallisationsreaktor vorgeschaltete Abscheidevorrichtung für die unmittelbar hergestellten Granulate, als Zentrifuge ausgebildet sein.

Gemäß einer Weiterbildung der erfindungsgemäßen Vorrichtung weist die Kühleinrichtung ein Fördermittel für das Kühlfluid und wenigstens einen Wärmeüberträger zum Kühlen des Kühl-Fluidstromes innerhalb eines der Mischeinrichtung stromaufwärts angeordneten Abschnittes einer Förderleitung auf. Das Fördermittel für das Kühlfluid ist bevorzugt eine Pumpe, welche das Kühlfluid bevorzugt in einem Kreislauf fördert. In einem Abschnitt des im Kreislauf geförderten Fluids ist ein Wärmeüberträger angeordnet, insbesondere in Förderrichtung hinter der Separiereinrichtung für das Granulat und vor der Mischeinrichtung zum Einleiten des Granulats in den Kühl-Fluidstrom. Mit diesem wird die vom Granulat in den Fluidstrom eingeleitete Wärmeenergie wieder aus dem Fluidstrom entzogen und die Temperatur des Kühlfluidstromes unterhalb einer zulässigen Höchsttemperatur gehalten. Bevorzugt weist der zum Kühlen des Granulats verwendete Fluidstrom unmittelbar vor dem Durchströmen des Wärmeüberträgers eine Temperatur von vorzugsweise unterhalb 70°C auf.

In einer anderen Ausgestaltung der Erfindung weist optional oder alternativ die Kühleinrichtung, welche dem Kristallisationsreaktor zugeordnet ist, wenigstens einen Wärmeüberträger auf, durch den das zu kühlende Granulat hindurchgeführt wird, oder diese umfasst einen Wärmeüberträger, der in einem Wandbereich des Kristallisationsreaktors angeordnet ist. Teile des Kristallisationsreaktors sind beispielsweise als Wärmeüberträger ausgebildet bzw. umfassen diesen, wodurch der Wärmeübergang von dem durch den Kristallisationsreaktor geleiteten Granulat auf das Kühlfluid der Kühleinrichtung bewirkt ist. Beispielsweise wird mittels des Wärmeüberträgers innerhalb des Kristallisationsreaktors der Granulatstrom in mehrere kleinere Förderströme unterteilt. Die Wärmeübertragung vom Granulatstrom über den Wärmeüberträger in das Kühlfluid ist damit weiter verbessert. Der Kristallisationsreaktor weist für den innerhalb des Kristallisationsreaktors angeordneten Wärmeüberträger mindestens einen Kühlfluid-Einlass und einen Kühlfluid-Auslass auf.

Vorzugsweise umfasst die dem Kristallisationsreaktor zugeordnete Kühleinrichtung wenigstens einen mit dem Aufnahmeraum für das Granulat verbundenen Kühlmittel-Auslass zum Abgeben von Kühlmittel in das Behälterinnere, wobei der Kühlmittel-Auslass vorzugsweise mit einem als Druckbehälter ausgebildeten Kühlmittelreservoir verbunden ist. Alternativ oder optional zu einem im Kristallisationsreaktor angeordneten Wärmeüberträger wird das Kühlmittel direkt in den Aufnahmeraum des Kristallisationsreaktors für das Granulat eingeleitet. Vorzugsweise ist das Kühlmittel ein gasförmiges Fluid, welches bevorzugt entgegen der Strömungsrichtung des Granulats in den Kristallisationsreaktor eingeleitet wird. Bevorzugt bewegt sich das Granulat durch den Kristallisationsreaktor in etwa vertikaler Richtung von oben nach unten, wohingegen das eingeleitete gasförmige Kühlfluid unten eingeleitet wird und in Richtung des oberen Endes des Kristallisationsreaktors zwangsbewegt wird.

Gemäß einer bevorzugten Ausführungsform der Erfindung ist/sind die Abscheideeinrichtung und/oder die Separiereinrichtung als Zentrifuge ausgebildet. Mittels einer Zentrifuge ist ein einfaches Abtrennen bzw. Abscheiden des Granulates von einem Fluidstrom bzw. aus einem Förderstrom oder einem Kühlfluidstrom möglich. Andere Abscheideeinrichtungen und/oder Separiereinrichtungen sind denkbar, wie beispielsweise ein Sieb, über das das Granulat geleitet wird.

In einer bevorzugten Weiterbildung der erfindungsgemäßen Vorrichtung ist der Behälter zum Zwischenlagern auslassseitig mit einer Zuführleitung für das abgekühlte Granulat zum erneuten Einbringen des Granulats in den Kristallisationsreaktor verbunden. Die Zuführleitung ist als Förderstrecke für das gekühlte Granulat ausgebildet, wobei das Zugeben des kühlen Granulats zum "heißen" Granulat, was unmittelbar nach dessen Herstellung in Richtung des Kristallisationsreaktors geleitet wird, in einem bestimmten Verhältnis erfolgt. Das unmittelbar hergestellte Granulat hat eine Granulattemperatur, die in einem Temperaturbereich von etwa 100°C bis ungefähr 220 °C liegen kann. Das dem heißen Granulat zugegebene kühle Granulat wird somit durch das umgebende heiße Granulat wieder auf eine Temperatur oberhalb der Kristallisationstemperatur erwärmt, bevorzugt ohne Zugeben von separaten Wärmeenergie in den Kristallisationsreaktor. Zudem kann durch das Zugeben des abgekühlten Granulats in den heißen Granulatstrom Einfluss auf eine mittlere Ausgangstemperatur zu Beginn des Kristallisationsprozesses im Kristallisationsreaktor genommen werden.

Vorzugsweise umfasst die erfindungsgemäße Vorrichtung ferner eine Granuliereinrichtung zum Erzeugen von Kunststoff-Granulat aus einem Schmelzestrom; eine Abscheideeinrichtung für die erzeugten festen Granulate aus einem von der Granuliereinrichtung zur Abscheideeinrichtung geführten Förderstrom und/oder eine dem Kristallisationsreaktor nachgeschaltete Weiterverarbeitungseinrichtung. Mit Hilfe der Granuliereinrichtung, welche beispielsweise als Strang-Granuliereinrichtung, WasserringGranuliereinrichtung oder Unterwasser-Granuliereinrichtung ausgebildet sein kann, wird ein bevorzugt fortwährender Granulatstrom erzeugt.

Bevor das Granulat bzw. der Granulatstrom in den Kristallisationsreaktor eingeleitet wird, ist in einer Ausführungsform der Erfindung das Granulat, das als Förderstrom zusammen mit einem Fluidstrom von der Granuliereinrichtung abtransportiert wird, in eine Abscheideeinrichtung einzuleiten. In dieser wird das Granulat aus dem Förderstrom abgeschieden. Der dann entstehende Granulatstrom, da auch das Abscheiden als fortwährender Prozess ausgeführt wird, wird dann kontinuierlich in den Einlass des Kristallisationsreaktors eingeleitet.

In einer bevorzugten Ausführungsform der Erfindung ist dem Kristallisationsreaktor eine Weiterverarbeitungseinrichtung in Form beispielsweise eines Festphasenpolykondensators nachgeschaltet, mit dem die aus dem Kristallisationsreaktor ausgegebenen Granulate weiterverarbeitet oder nachbehandelt werden, um insbesondere deren Eigenschaften weiter anzupassen.

Die zum erfindungsgemäßen Verfahren beschriebenen, bevorzugten Ausführungsformen bzw. Weiterbildungen sind zugleich auch bevorzugte Ausführungsformen der erfindungsgemäßen Vorrichtung. Zur erfindungsgemäßen Vorrichtung beschriebene, bevorzugte Ausführungsformen bzw. Weiterbildungen sind zugleich auch bevorzugte Ausführungsformen des oben beschriebenen Verfahrens zum thermischen Behandeln von Granulaten aus Kunststoff.

Die Erfindung wird im Folgenden anhand eines bevorzugten Ausführungsbeispiels der Vorrichtung bzw. des Verfahrens unter Bezugnahme auf die beigefügten Figuren näher beschrieben. Es zeigen:
- Figur 1:: eine schematische Darstellung eines Ausführungsbeispiels einer erfindungsgemäßen Vorrichtung, und
- Figur 2 :: ein Blockschaltbild eines Verfahrens zum thermischen Behandeln von Granulat aus Kunststoff.

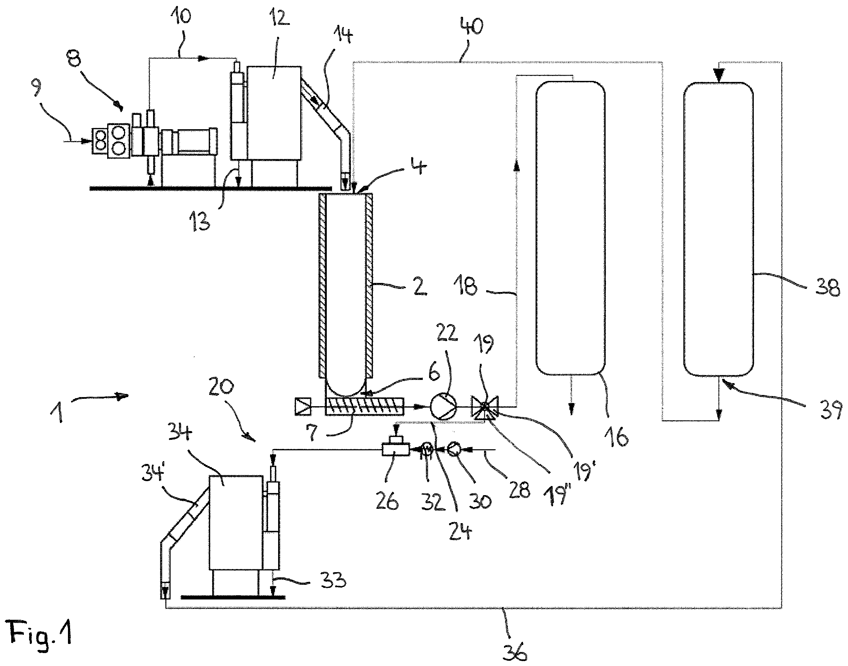

In Fig. 1 ist eine Anlage zum Herstellen von Kunststoffgranulat gezeigt, die sich im Wesentlichen aus einer Vorrichtung 1 zum thermischen Behandeln von Kunststoffgranulat und einer der Vorrichtung 1 vorgeschalteten Granuliereinrichtung 8 zusammensetzt.

Mit der Granuliereinrichtung 8 wird das Kunststoffgranulat aus einem fortwährend in Richtung der Granuliereinrichtung 8 über die Zuführleitung 9 geförderten Kunststoff-Schmelzestrom erzeugt. Die Granuliereinrichtung 8 ist auslassseitig über eine Förderleitung 10 mit einer Abscheideeinrichtung 12 verbunden. Die Abscheideeinrichtung 12 weist einen Fluidauslass 13 und einen Feststoffauslass 14 auf. Der Feststoffauslass 14 ist einem Einlass 4 eines Kristallisationsreaktors 2 der Vorrichtung 1 zugeordnet. Die in der Abscheideeinrichtung 12 separierten Granulatkörner oder Partikel werden in der gezeigten Ausführung einem Kristallisationsreaktor 2 zugeführt.

Am Auslass 6 des Kristallisationsreaktors 2 ist ein Schneckenförderer 7 angeordnet. Mit dem Schneckenförderer 7 erfolgt ein kontrolliertes Austragen des zumindest teilkristallinen Granulats. Der Schneckenförderer 7 ist auslasseitig mit einem Granulatförderer 22 zum Abführen des teilkristallinen Granulates verbunden.

Dem Granulat-Förderer 22 ist eine Abzweigstelle 19 nachgeschaltet. Die Abzweigstelle 19 weist einen Abgang 19' auf, an dem eine Förderleitung 18 zum Abführen des Granulats in Richtung einer Weiterverarbeitungseinrichtung 16 angeschlossen ist. Die Abzweigstelle 19 weist ferner einen Abgang 19" auf, an der eine Förderleitung 24 in Richtung einer Kühleinrichtung 20 angeschlossen ist. Im Normalbetrieb wird das Granulat vom Granulatförderer 22 über die Abzweigstelle, den Abgang 19' und die Förderleitung 18 zur Weiterverarbeitungseinrichtung 16 gefördert.

Über den Abgang 19" erfolgt das Umleiten des Granulats über die Förderleitung 24 in Richtung einer Kühleinrichtung 20. Mit der Kühleinrichtung 20 wird das hergestellte Granulat soweit abgekühlt, dass der Kristallisationsprozess im Granulat gestoppt wird. Die Kühleinrichtung 20 umfasst eine Mischeinrichtung 26 zum Einmischen des abgezweigten Granulats in einen Kühlkreislauf 28.

Die Mischeinrichtung 26 ist mit einer Separiereinrichtung 34 verbunden. Die Separiereinrichtung 34 weist einen Fluidauslass 33 und einen Feststoffauslass 34' auf. Über den Feststoffauslass 34' wird das gekühlte Granulat abgegeben, das über eine Förderstrecke 36 in Richtung eines Behälters 38 transportiert wird. In dem Behälter 38 wird das gekühlte Granulat zwischengelagert.

Der Behälter 38 weist einen Granulatauslass 39 auf, der über eine Zuführleitung 40 mit dem Einlass 4 des Kristallisationsreaktors 2 verbunden ist.

Nachfolgend wird das erfindungsgemäße Verfahren zum thermischen Behandeln in Verbindung mit der vorbeschriebenen Anlage zum Herstellen von Kunststoffgranulat erläutert. Die Vorrichtung 1 umfasst zumindest einen Kristallisationsreaktor 2, in den im Betrieb zuvor hergestelltes Granulat über dessen Einlass 4 mit einer vorbestimmbaren Temperatur eingegeben wird. Das am Einlass 4 in den Kristallisationsrektor 2 eingeleitete Granulat kann eine Temperatur im Bereich von etwa 30°C bis ungefähr 220°C haben. Innerhalb des Kristallisationsreaktors 2 läuft der Kristallisationsprozess des darin eingebrachten Granulats ab, wobei durch die ablaufende Kristallisation die Gitterstruktur des Granulats verändert und damit Einfluss auf dessen Eigenschaften genommen wird. Am Auslass 6 des Kristallisationsreaktors 2 weist das Granulat dann einen bestimmten Kristallisationsgrad auf, wobei das Granulat am Auslass 6 eine Temperatur im Bereich von etwa 30°C bis ungefähr 220°C aufweisen kann. Am Auslass 6 des Kristallisationsreaktors ist für das gezielte Ausbringen des Granulats ein Schneckenförderer 7 vorgesehen.

Das Granulat wird bevorzugt mittels einer dem Kristallisationsreaktor 2 vorgeschalteten Granuliereinrichtung 8 erzeugt, der fortwährend ein Schmelzestrom über die Zuführleitung 9 zugeführt wird. Das erzeugte Granulat wird mittels einer Förderleitung 10 als Förderstrom, bestehend aus dem Granulat und einem Fluid, insbesondere Wasser, zu einer Abscheideeinrichtung 12 beispielsweise in Form eines Zentrifugaltrockners geleitet. In der Abscheideeinrichtung 12 werden der sich aus dem festen Granulat und einem Fluidstrom zusammensetzende Förderstrom wieder unterteilt. Der Fluidstrom wird über den Fluidauslass 13 aus der Abscheideeinrichtung 12 abgeführt. Das feste Granulat wird über die Feststoffauslass 14 der Abscheideeinrichtung 12 dem Einlass 4 des Kristallisationsreaktors 2 zugeführt.

Im gezeigten Ausführungsbeispiel ist eine Kühleinrichtung 20 vorgesehen, welche dem Kristallisationsreaktor 2 nachgeschaltet ist, um teilkristallisiertes Granulat oder teilweise noch kristallisierendes Granulat zu kühlen. Im Falle einer Störung an beispielsweise einer dem Kristallisationsreaktor 2 nachgeschalteten Weiterverarbeitungseinrichtung 16, wie einem Festphasenpolykondensator, kann der abgegebene teilkristallisierte Granulatstrom unter Umständen nicht mehr mittels der Förderleitung 18 in Richtung der Weiterverarbeitungseinrichtung 16 transportiert und abgeführt werden. Dies würde zu einem erzwungenen Stillstand des Herstellungsprozesses der Vorrichtung 1 führen. Insbesondere auch um in einem solchen Störfall den Herstellungsprozess nicht unterbrechen zu müssen und Einfluss auf den Kristallisationsgrad des Granulats nehmen zu können, ist in der gezeigten Ausführungsform die Kühleinrichtung 20 vorgesehen. In der dem Kristallisationsreaktor 2 nachgeschalteten Förderstrecke für den Granulatstrom ist eine Abzweigstelle 19 vorgesehen, so dass Granulat in Richtung der Kühleinrichtung 20 geleitet werden kann. Das Fördern des Granulatstromes erfolgt mittels eines Granulatförderers 22. Das Umschalten zwischen dem regulären Förderweg zur Weiterverarbeitungseinrichtung 16 oder der Kühleinrichtung 20 wird über ein 3/2-Wegeventil als Abzweigstelle 19 realisiert.

Durch ein Umleiten des Granulatstromes in die Förderleitung 24 wird das teilkristaline Granulat in der gezeigten Ausführungsform einer Mischeinrichtung 26 zugeführt, in welche ein Kühl-Fluidstrom 28 eingeleitet werden kann. In der Förderleitung 24, also unmittelbar vor dem Einleiten des Granulats bzw. an der Mischeinrichtung 26, also mit dem Einleiten des Granulats in den Fluidstrom, weist das Granulat eine Temperatur im Bereich von etwa 100°C bis ungefähr 220°C auf. Der Mischeinrichtung 26 ist stromaufwärts ein Fördermittel 30 für das Kühlfluid, insbesondere Wasser, wie auch ein Wärmeüberträger 32 für das Einstellen einer Kühlmitteltemperatur in der Kühleinrichtung 20 angeordnet. Der zum Kühlen des Granulats verwendete Kühl-Fluidstrom weist in einer Ausführungsform unmittelbar vor dem Durchströmen des Wärmeüberträgers eine Temperatur von vorzugsweise unterhalb 70°C auf. Das in den Kühl-Fluidstrom eingegebene Granulat ist in eine Separiereinrichtung 34 einleitbar, in der das Granulat wieder von dem Kühl-Fluidstrom 28 separiert wird. Das separierte Granulat wird mittels einer an der Separiereinrichtung 34 ausgebildete Feststoffauslass 34' abgeführt, wobei das Granulat am Feststoffauslass 34' dann in einer Ausführungsform der Erfindung eine Temperatur unterhalb von 60 °C aufweist.

In einer bevorzugten Ausführungsform der Erfindung hat das Granulat eine Granulattemperatur unterhalb von 60 °C. Das gekühlte Granulat wird über eine Förderstrecke 36 von der Separiereinrichtung 34 zu einem Behälter 38 zum Zwischenlagern geleitet. Der Behälter 38, ähnlich einem Silo ausgebildet, nimmt das gekühlte Granulat für die Zeit auf, beispielsweise während einer Störung an der Vorrichtung 1. Zu einem gewünschten Zeitpunkt, beispielsweise nach dem Beseitigen der Störung, wird das 3/2-Wegeventil wieder - in Richtung der Weiterverarbeitungseinrichtung 16 - umgeschaltet, so dass der Granulatstrom wieder den regulären Weg durch die Förderleitung 18 nimmt. Ein Granulat-Auslass 39 des Behälters 38 ist mittels einer Zuführleitung 40 mit dem Einlass 4 des Kristallisationsreaktors 2 verbunden. Die Zuführleitung 40 bildet eine zweite, parallele Zuführung zum Kristallisationsreaktor 2 aus, über die das kühle Granulat in einem bestimmten Verhältnis zur Menge des durch den Feststoffauslass 14 in den Einlass 4 des Kristallisationsreaktors eingegebenen heißen Granulats zugegeben werden kann. Der Anteil des Mengenstromes des kühlen Granulats zum Gesamtmengenstrom, der über den Einlass 4 in den Kristallisationsreaktor 2 eingeleitet wird, liegt vorzugsweise etwa in einem Bereich von 1 - 15 %.

Alternativ oder zusätzlich zur Kühleinrichtung 20 zu der in der Figur gezeigten Ausführungsform kann eine Kühleinrichtung auch unmittelbar dem Einlass 4 des Kristallisationsreaktors vorgeschaltet sein. Das Abzweigen des Granulatstromes erfolgt somit vor dem Eingeben in den Kristallisationsreaktor 2. Alternativ oder zusätzlich zu der Kühleinrichtung 20 kann in einer weiteren Ausführungsform, welche jedoch nicht näher gezeigt wird, eine Kühleinrichtung so ausgebildet sein, dass diese das den Kristallisationsreaktor 2 durchströmende Granulat abkühlt. Eine Bereiche des Kristallisationsreaktors 2 ausbildende Kühleinrichtung umfasst bevorzugt einen innerhalb des Kristallisationsreaktors 2 oder in dessen Wandbereichen ausgebildeten Wärmeüberträger.

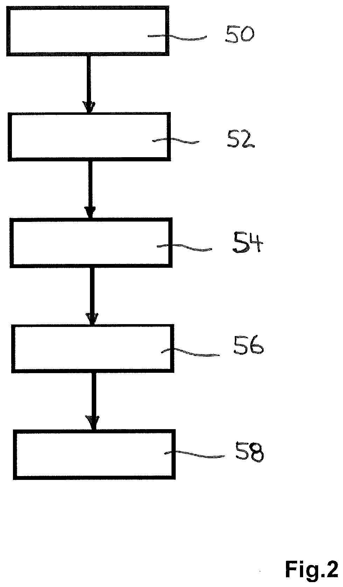

In Figur 2 ist eine Ausführung des erfindungsgemäßen Verfahrens schematisch in einem Blockschaltbild dargestellt. Im Schritt 50 wird das Granulats einem Kristallisationsreaktor zugeführt. Im nachfolgenden Schritt 52 wird das Granulat in dem Kristallisationsreaktor zumindest teilweise kristallisiert. Im Schritt 54 wird das teilkristallisierte bzw. kristallisierende Granulat in einer erfindungsgemäßen Kühleinrichtung gekühlt. Danach wird in der gezeigten Ausführung im Schritt 56 das gekühlte teilkristalline Granulat in einen Behälter 38 (Fig.1) zum Zwischenlagern des gekühlten Granulats eingegeben. Im Schritt 58 wird das eine bestimmte Zeitdauer im Behälter gelagerte kühle Granulat dann in Richtung des Kristallisationsreaktors abgegeben.

### Bezugszeichenliste:

- 1: Vorrichtung
- 2: Kristallisationsreaktor
- 4: Einlass
- 6: Auslass
- 7: Schneckenförderer
- 8: Granuliereinrichtung
- 9: Zuführleitung
- 10: Förderleitung
- 12: Abscheideeinrichtung
- 13: Fluidauslass
- 14: Feststoffauslass
- 16: Weiterverarbeitungseinrichtung
- 18: Förderleitung
- 19: Abzweigstelle
- 19', 19": Abgang
- 20: Kühleinrichtung
- 22: Granulat-Förderer
- 24: Förderleitung
- 26: Mischeinrichtung
- 28: Kühl-Fluidstrom
- 30: Fördermittel
- 32: Wärmeüberträger
- 33: Fluidauslass
- 34: Separiereinrichtung
- 34': Feststoffauslass
- 36: Förderstrecke
- 38: Behälter
- 39: Granulatauslass
- 40: Zuführleitung
- 50, 52, 54: Verfahrensschritt
- 56, 58: Verfahrensschritt

## Patentansprüche

1. Verfahren zum thermischen Behandeln von Granulat aus Kunststoff, insbesondere aus Polyester, mittels Kristallisation, mit den Schritten:
- Zuführen eines Granulats zu einem Kristallisationsreaktor (2), und
- zumindest teilweises Kristallisieren des Granulats in dem Kristallisationsreaktor (2), **gekennzeichnet durch** Kühlen des teilkristallisierenden bzw. teilkristallisierten Granulats.

2. Verfahren nach Anspruch 1,
**dadurch gekennzeichnet, dass** das teilkristallisierte Granulat unmittelbar vor dem Zuführen in den Kristallisationsreaktor (2), innerhalb des Kristallisationsreaktors (2) und/ oder nach dem Durchlaufen des Kristallisationsreaktors (2) gekühlt wird.

3. Verfahren nach Anspruch 1 oder 2, ferner aufweisend:
- Kühlen des Granulats, vorzugsweise zum Halten des Kristallisationsgrades des Granulats unterhalb eines bestimmten Grenzwertes, auf eine Granulattemperatur unterhalb der Kristallisationstemperatur des Kunststoffes, vorzugsweise unterhalb 90°C, besonders bevorzugt auf eine Temperatur unterhalb 60°C.

4. Verfahren nach einem der vorstehenden Ansprüche, ferner aufweisend;
- Kühlen des teilkristallisierten Granulats mittels eines Fluidstromes (28), der vorzugsweise in einem Kreislauf geführt wird, wobei vorzugsweise
a) zum Kühlen Granulat in den Fluidstrom (28) eingebracht wird, bevor das Granulat in den Kristallisationsreaktor (2) eingebracht wird oder nachdem das Granulat den Kristallisationsreaktor (2) durchlaufen hat, oder
b) zum Kühlen des Granulats der Fluidstrom in Bereiche des Kristallisationsreaktors (2) eingeleitet wird, vorzugsweise durch Einleiten des Fluidstromes in entgegengesetzte Richtung zur Bewegungsrichtung des Granulats durch den Kristallisationsreaktor (2).

5. Verfahren nach Anspruch 4, ferner aufweisend einen oder beide der nachfolgenden Schritte;
- Abscheiden des vorzugsweise auf die Granulattemperatur unterhalb von etwa 90°C, bevorzugt auf eine Temperatur unterhalb 60°C, gekühlten Granulats aus dem Fluidstrom oder aus dem vom Fluidstrom durchströmten Kristallisationsreaktor.

6. Verfahren nach einem der Ansprüche 1 bis 5, ferner aufweisend;
- Einbringen des gekühlten Granulats in einen Behälter (38) zum Zwischenlagern des gekühlten teilkristallinen Granulats,
wobei vorzugsweise das in dem Behälter (38) gelagerte, kühle Granulat als Mengenstrom in den Kristallisationsreaktor (2) eingeleitet wird, wobei die Größe des Mengenstromes variierbar ist.

7. Verfahren nach einem der vorstehenden Ansprüche, umfassend einen, mehrere oder sämtliche der nachfolgenden Schritte:
- Herstellen eines Granulats mittels einer Granuliereinrichtung (8);
- Zuführen des erzeugten Granulats zu einer Abscheidevorrichtung (12);
- Abscheiden des im Förderstrom enthaltenen festen Granulats aus dem Förderstrom, wobei das Granulat nach dem Abscheidevorgang eine Granulattemperatur in einem Temperaturbereich von etwa 30°C bis ungefähr 220°C hat, und/oder
- Einleiten des Granulats in Form eines Granulatstromes in den Kristallisationsreaktor (2) oder zu einem Nachfolgeprozess.

8. Vorrichtung zum thermischen Behandeln von Granulat aus Kunststoff, insbesondere aus Polyester, mittels Kristallisation, mit
einem Granulate aufnehmenden Kristallisationsreaktor (2) zum wenigstens teilweisen Kristallisieren der Granulate;
**dadurch gekennzeichnet, dass** eine Kühleinrichtung (20) zum Kühlen der teilkristallisierten Granulate vorgesehen ist.

9. Vorrichtung nach Anspruch 8,
**dadurch gekennzeichnet, dass** die Kühleinrichtung (20) dem Kristallisationsreaktor (2) unmittelbar vorgeschaltet, oder dem Kristallisationsreaktor (2) zugeordnet ist oder dem Kristallisationsreaktor (2) nachgeschaltet ist.

10. Vorrichtung nach Anspruch 8 oder 9,
wobei die Kühleinrichtung (20) so dimensioniert und dazu eingerichtet ist, das Granulat auf eine Granulattemperatur unterhalb der Kristallisationstemperatur des Kunststoffes, vorzugsweise unterhalb 90°C, besonders bevorzugt auf eine Temperatur unterhalb 60°C abzukühlen, und vorzugsweise den Kristallisationsgrad des Granulats unterhalb eines bestimmten Grenzwertes zu halten, und
wobei der Kühleinrichtung (20) oder dem Kristallisationsreaktor (2) ein Behälter (38) zum Aufnehmen des teilkristallisierten Granulats nachgeschaltet ist.

11. Vorrichtung nach einem der vorstehenden Ansprüche,
**dadurch gekennzeichnet, dass** die Kühleinrichtung (20) eine Mischeinrichtung (26) zum Mischen des Granulats mit einem Fluidstrom (28), vorzugsweise einem Kühlwasserstrom, und mindestens eine Separiereinrichtung (34) zum Trennen des gekühlten Granulats aus dem Fluidstrom aufweist, wobei
die Separiereinrichtung (34) vorzugsweise mit der Mischeinrichtung (26) über eine Förderleitung zum Transportieren des Gemisches aus Fluidstrom und Granulat medienleitend verbunden ist.

12. Vorrichtung nach Anspruch 8 bis 11,
**dadurch gekennzeichnet, dass** die Kühleinrichtung (20) stromabwärts mit einem als Zwischenspeicher ausgebildeten Behälter (38) verbunden ist, und/oder dass die Kühleinrichtung (20) ein Fördermittel (30) für das Fluid und wenigstens einen Wärmeüberträger (32) zum Kühlen des Fluidstromes aufweist.

13. Vorrichtung nach Anspruch 8 bis 12,
**dadurch gekennzeichnet, dass** die Kühleinrichtung (20), welche dem Kristallisationsreaktor (2) zugeordnet ist, wenigstens einen Wärmeüberträger aufweist, durch den das zu kühlende Granulat hindurch geführt wird, oder einen Wärmeüberträger umfasst, der in einem Wandbereich des Kristallisationsreaktors angeordnet ist.

14. Vorrichtung nach einem der Ansprüche 8 bis 12,
**dadurch gekennzeichnet, dass** die dem Kristallisationsreaktor (2) zugeordnete Kühleinrichtung wenigstens einen mit dem Aufnahmeraum für das Granulat verbundenen Kühlmittelauslass zum Abgeben von Kühlmittel in das Behälterinnere aufweist, wobei der Kühlmittelauslass vorzugsweise mit einem als Druckbehälter ausgebildetes Kühlmittelreservoir verbunden ist.

15. Vorrichtung nach einem der Ansprüche 8 bis 14,
**dadurch gekennzeichnet, dass** die Abscheideeinrichtung (12) und/oder die Separiereinrichtung (34) als Zentrifuge ausgebildet ist/sind.

16. Vorrichtung nach einem der Ansprüche 12 bis 15,
**dadurch gekennzeichnet, dass** der Zwischenspeicher (38) auslassseitig mit einer Zuführleitung (40) für das gekühlte Granulat zum erneuten Einbringen des Granulats in den Kristallisationsreaktor (2) verbunden ist.

17. Vorrichtung nach einem der vorstehenden Ansprüche, ferner aufweisend:
- eine Granuliereinrichtung (8) zum Erzeugen von Kunststoff-Granulat aus einem Schmelzestrom;
- einer Abscheideeinrichtung (12) für die erzeugten, festen Granulate aus einem von der Granuliereinrichtung zur Abscheideeinrichtung geführten Förderstrom.
